# EUROPEAN PATENT SPECIFICATION

(11) **EP 3 666 576 B1**
(45) Date of publication and mention of the grant of the patent: **28.04.2021**
(21) Application number: 19209873.9
(22) Date of filing: 18.11.2019
(51) Int. Cl.: B60K 26/02, B60W 30/18, B60L 7/18, B60L 7/10

(54) **ACCELERATOR PEDAL PROVIDING REGENERATIVE BRAKE FEEDBACK**
BESCHLEUNIGERPEDAL MIT REGENERATIVEM BREMSEN-FEEDBACK
PÉDALE D'ACCÉLÉRATEUR FOURNISSANT UNE RÉTROACTION DE FREIN RÉGÉNÉRATIVE

(30) Priority: 11.12.2018 US 201816216043
(43) Date of publication of application: 17.06.2020
(73) Proprietor: Atieva, Inc., Newark, CA 94560 (US)
(72) Inventor: Gauthier, Jean-Philippe, San Francisco, CA California 94115 (US)
(74) Representative: Ungerer, Olaf

(56) References cited:
- WO-A1-99/24283
- WO-A1-2018/178526
- US-A1- 2018 093 572

## Description

### FIELD OF THE INVENTION

The present invention relates generally to a vehicle and, more particularly, to the design and configuration of an accelerator pedal mechanism that provides the user with feedback relating to the amount of available regenerative braking torque.

### BACKGROUND OF THE INVENTION

In a conventional vehicle utilizing an internal combustion engine (ICE), the functioning of the accelerator pedal is quite straightforward. Specifically, when the driver presses down on the accelerator pedal the car accelerates; when the driver maintains the accelerator pedal in a particular location the car speed remains steady (assuming a level road or a road with a uniform incline); and when the driver releases pressure on the accelerator pedal the car decelerates, the rate of deceleration depending on whether or not the engine is in gear, the level of incline, vehicle weight, etc. Assuming the driver wishes to decelerate at a faster rate, they can depress the brake pedal, thereby activating a friction-based braking system that provides further deceleration.

In hybrid and electric vehicles, in addition to conventional friction-based braking systems it is common for the vehicle to also utilize some form of regenerative braking. A regenerative braking system utilizes the vehicle's electric motor(s) to generate electricity during deceleration, allowing the system to partially recharge the battery pack while slowing the car. Unfortunately while regenerative braking system is more energy efficient than conventional friction-based braking systems since it allows energy to be recaptured rather than lost through heat, it is not without its drawbacks. Specifically, the available braking torque from the regenerative braking system is continually varying since it is linked to current battery conditions (e.g., maximum battery charging current, battery state of charge (SOC), battery temperature) and maximum motor torque. Therefore even when the driver maintains a constant accelerator pedal position, the amount of braking torque may vary. This inconsistent pedal/braking characteristic often leads to driver discomfort.

Accordingly, what is needed is an accelerator pedal system that helps alleviate the discomfort felt by some drivers during EV deceleration by providing feedback based on the available regenerative braking torque. The present invention provides such an accelerator pedal feedback system.

The US2018/093572A1 discloses a regenerative braking system that includes at least one actuator and a controller. The controller may be configured to: determine whether an accelerator pedal is depressed; when the accelerator pedal is depressed, determine an amount of regenerative braking based on behavior of the accelerator pedal; when the accelerator pedal is not depressed, determine the amount of regenerative braking based on motion of the vehicle; and control the at least one actuator to generate the determined amount of regenerative braking.

### SUMMARY OF THE INVENTION

The present invention provides a vehicle accelerator pedal assembly that is comprised of (i) an accelerator pedal adjustable between a first pedal position and a second pedal position, where the first pedal position corresponds to a fully depressed accelerator pedal and the second pedal position corresponds to a fully released accelerator pedal; (ii) an actuator mechanically coupled to the accelerator pedal, the actuator configured to receive a plurality of control signals and in response to each of the plurality of control signals to adjust the second pedal position of the accelerator pedal within a range of positions between a first accelerator pedal release position and a second accelerator pedal release position; and (iii) an actuator control unit configured to transmit each of the plurality of control signals to the actuator, where the actuator control unit selects a specific accelerator pedal release position within the range of positions between the first accelerator pedal release position and the second accelerator pedal release position, and wherein the actuator control unit is configured to determine the available regenerative braking torque and to select the specific accelerator pedal release position based on the available regenerative braking torque.

In one aspect, a neutral pedal position is located between the first and second pedal positions of the accelerator pedal. When the accelerator pedal is positioned in the neutral pedal position the vehicle power train applies 0% torque. When the accelerator pedal is positioned between the neutral pedal position and the second pedal position the vehicle power train applies braking torque. When the accelerator pedal is positioned between the first pedal position and the neutral pedal position the vehicle power train applies driving torque.

The available regenerative braking torque may be determined relative to current vehicle speed, a pre-defined pedal torque map, a set of power train characteristics, and/or a set of battery pack characteristics.

In another aspect, a set of vehicle power train characteristics may be contained in a look-up table that is held in a memory accessible by the actuator control unit. The actuator control unit may be configured to determine the available regenerative braking torque based on the set of vehicle power train characteristics and the current vehicle speed.

A further understanding of the nature and advantages of the present invention may be realized by reference to the remaining portions of the specification and the drawings.

### BRIEF DESCRIPTION OF THE DRAWINGS

It should be understood that the accompanying figures are only meant to illustrate, not limit, the scope of the invention and should not be considered to be to scale. Additionally, the same reference label on different figures should be understood to refer to the same component or a component of similar functionality.
Fig. 1 provides a graphical representation of the maximum regenerative braking torque versus vehicle speed;
Fig. 2 illustrates the operating characteristics of an accelerator pedal for a prior art EV configuration in which regenerative braking occurs during pedal release;
Fig. 3 provides a graphical representation of the accelerator pedal characteristics in a typical prior art EV traveling at 20 mph;
Figs. 4A-4D illustrate the invention for an exemplary accelerator pedal, where each of the figures corresponds to a particular point in time for the same EV and in which a different amount of regenerative braking torque is available to the driver;
Fig. 5 graphically illustrates the accelerator pedal position at full release versus the available regenerative braking torque for the exemplary embodiment shown in Figs. 4A-4D;
Fig. 6 provides a block diagram of the primary components, assemblies and subsystems used in at least one embodiment of the invention;
Fig. 7A-7C illustrate three different potential mounting locations for a pedal actuator when used with a floor mounted accelerator pedal;
Fig. 8A-8C illustrate three different potential mounting locations for a pedal actuator when used with a suspended accelerator pedal; and
Fig. 9 graphically illustrates a pre-defined pedal torque map that decreases braking torque at a preset low speed to achieve zero regenerative braking when the vehicle stops.

### DESCRIPTION OF THE SPECIFIC EMBODIMENTS

As used herein, the singular forms "a", "an" and "the" are intended to include the plural forms as well, unless the context clearly indicates otherwise. The terms "comprises", "comprising", "includes", and/or "including", as used herein, specify the presence of stated features, integers, steps, operations, elements, and/or components, but do not preclude the presence or addition of one or more other features, integers, steps, operations, elements, components, and/or groups thereof. As used herein, the term "and/or" and the symbol "/" are meant to include any and all combinations of one or more of the associated listed items. Additionally, while the terms first, second, etc. may be used herein to describe various steps or calculations, these steps or calculations should not be limited by these terms, rather these terms are only used to distinguish one step or calculation from another. For example, a first calculation could be termed a second calculation; similarly a first step could be termed a second step; similarly a first component could be termed a second component, all without departing from the scope of this disclosure. The term "battery pack" as used herein refers to one or more batteries electrically interconnected to achieve the desired voltage and capacity. The terms "electric vehicle" and "EV" may be used interchangeably and may refer to an all-electric vehicle, a plug-in hybrid vehicle, also referred to as a PHEV, or a hybrid vehicle, also referred to as a HEV, where a hybrid vehicle utilizes multiple sources of propulsion including an electric drive system. As used herein, "driving torque" refers to torque applied in the direction of travel and "braking torque" refers to torque applied in the direction opposite to that of the direction of travel. Accordingly, if a car is traveling in a forward direction, driving torque refers to motor torque that promotes and sustains forward motion of the car while braking torque refers to motor torque that is applied in the opposite direction in order to cause the car to decelerate. Similarly, if a car is traveling in a rearward direction, driving torque refers to motor torque that promotes and sustains rearward motion of the car while braking torque refers to motor torque that is applied in the opposite direction in order to cause deceleration of the car's rearward motion.

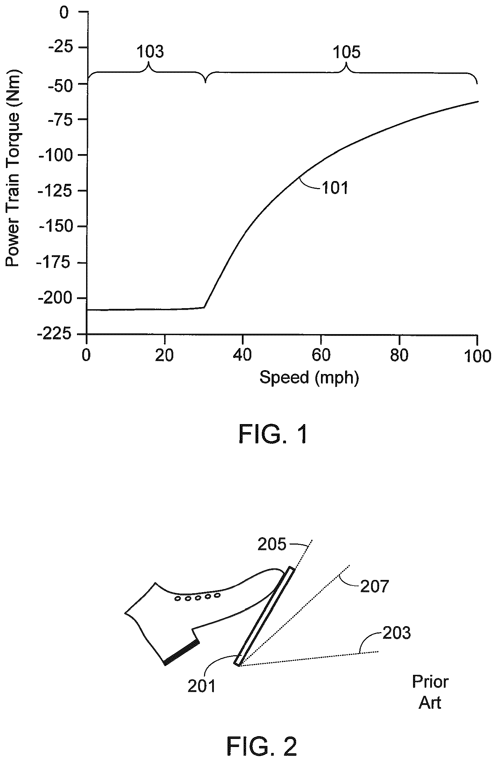

Fig. 1 graphically illustrates the maximum regenerative braking torque relative to vehicle speed for an exemplary EV. As illustrated by curve 101, at low vehicle speeds the maximum available regenerative braking torque is quite high, i.e., approximately - 42%. At these low speeds the braking torque is limited primarily by the EV's motor and therefore remains relatively constant. This aspect of the curve is represented by portion 103. For this particular EV, after the vehicle reaches a speed of approximately 30 mph, the maximum available regenerative braking torque begins to gradually decrease (i.e., portion 105 of curve 101). The decreasing torque shown in portion 105 of the curve is due to limitations of the vehicle's battery pack. Note that for purposes of this curve it is assumed that the regenerative system will never produce more energy than can be stored in the battery pack, i.e., that the battery pack SOC is always less than 100%. Thus the battery limitations impacting curve 101 are based primarily on the maximum charging power.

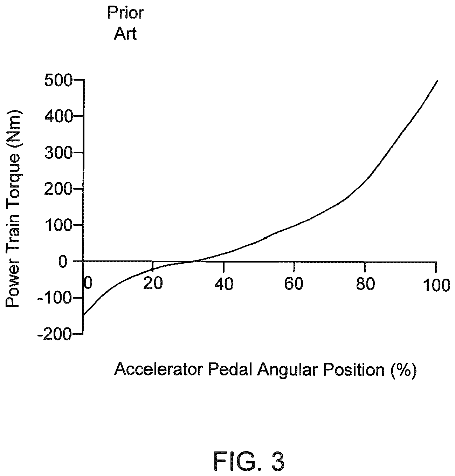

Figs. 2 and 3 illustrate a common approach to providing regenerative braking to the driver via the accelerator pedal. Illustrated in Fig. 2 is an accelerator pedal 201 with a range of motion between fully depressed (i.e., 100% depressed, shown as position 203) and fully released (i.e., 0% depressed, shown as position 205). In between the fully depressed and fully released positions is a partially depressed pedal position 207. In this example, partially depressed position 207 is located with a pedal depression of 30%.

Fig. 3 graphically illustrates the accelerator pedal characteristics in a typical prior art EV traveling at 20 mph, this graph specifically illustrating the power train torque demand versus accelerator pedal position. When pedal 201 is in partially depressed pedal position 207, the power train is not generating torque. This position is generally referred to as the neutral point. If the driver depresses the pedal past the neutral position towards fully depressed position 203, the power train generates a driving torque and the car accelerates. If the driver releases the pedal past the neutral position, i.e., towards and/or including the fully released position 205, the power train generates a braking torque and the car decelerates (i.e., regenerative braking causes the vehicle to decelerate).

While the configuration of the accelerator pedal described above does allow the driver to utilize one pedal driving, at least to a limited extent, due to the variations in available regenerative torque this system does not provide consistent feedback to the driver. For example, based on this exemplary system if the driver releases the pedal completely while going 20 mph, the power train will generate approximately -150 Nm of braking torque. If, however, the driver releases the pedal to the same position while going 60 mph, the power train will generate only approximately -100 Nm braking torque (i.e., the maximum available braking torque as provided in Fig. 1). Even more problematic is what occurs if the driver maintains this pedal position. Specifically, by maintaining this pedal position, as the vehicle slows from 60 mph the amount of braking torque will increase. This lack of consistency can make the driving experience less enjoyable and more difficult for everyone, especially for new drivers, relatively old drivers, and users that only occasionally drive and therefore may find this pedal configuration less intuitive than the traditional accelerator pedal configuration found in a conventional, ICE-based vehicle.

To overcome the lack of consistency in a conventional EV accelerator pedal, the present invention controls the position of the accelerator pedal when it is fully released based on the available regenerative braking torque. As a result, the driver is provided with direct, and constant, feedback regarding the available regenerative braking torque.

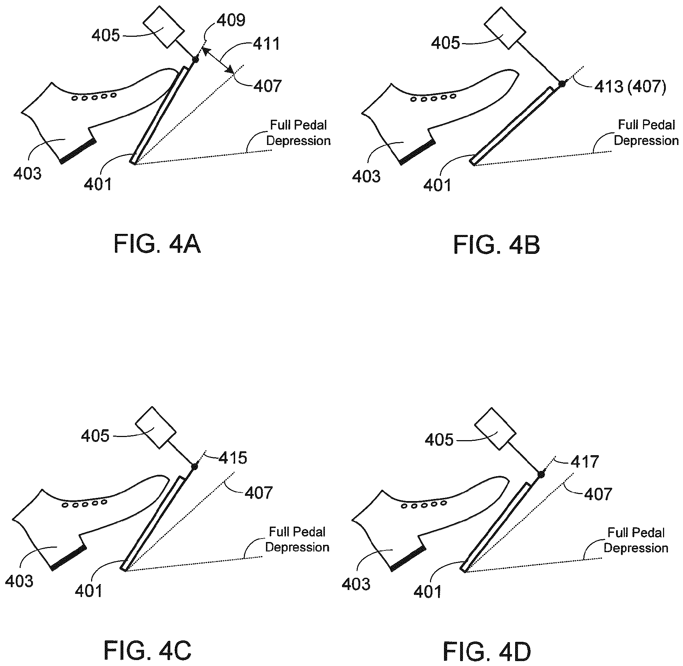

Figs. 4A-4D illustrate the invention for an exemplary accelerator pedal 401, where each of these figures corresponds to a particular point in time for the same EV and in which a different amount of regenerative braking torque is available to the driver. For illustration purposes and to help clarify the invention, the driver's foot 403 is shown in the same position in each of the figures, rather than being placed on the face of the accelerator pedal. As described in detail herein, an actuator 405 locates the release position of the pedal, i.e., the pedal position in which the pedal is fully released with 0% depression. The release position provided by actuator 405 is based on the available regenerative braking torque which, in turn, is based on battery pack characteristics, power train characteristics, and vehicle characteristics (e.g., vehicle speed). Note that the release pedal position is given relative to the neutral pedal position 407, where the neutral pedal position is defined as the position in which the power train is not applying any torque, i.e., neither positive nor negative torque.

In Fig. 4A, the location 409 of the fully released pedal is at its outermost position, i.e., where the distance 411 between pedal position 409 and neutral pedal position 407 is at its maximum. In the preferred embodiment, this position indicates to the driver that the maximum regenerative braking torque is available. Thus for the system illustrated in Fig. 1, this pedal position would correspond to portion 103 of curve 101.

In Fig. 4B, the location 413 of the fully released pedal is at its lowermost position, i.e., where there is no difference between the fully released pedal position (i.e., position 413) and the neutral pedal position (i.e., position 407). In the preferred embodiment, this position indicates to the driver that there is no regenerative braking torque available.

In Figs. 4C and 4D, the available regenerative braking torque is between 0% (i.e., pedal position 413 shown in Fig. 4B) and the maximum available regenerative braking torque (i.e., pedal position 409 shown in Fig. 4A). In Fig. 4C, the fully released pedal position (i.e., position 415) is closer to pedal position 409 than the fully released pedal position (i.e., position 417) shown in Fig. 4D, indicating that there is more regenerative braking torque available to the driver at the point in time represented by Fig. 4C than at the point in time represented Fig. 4D.

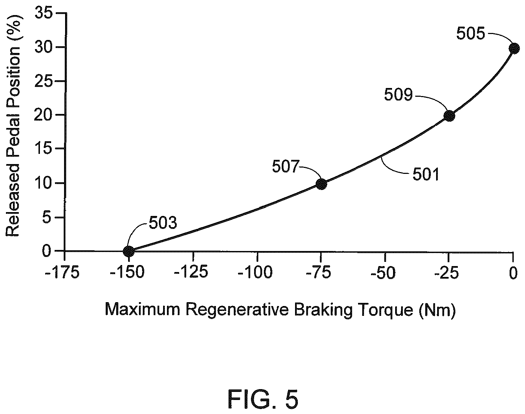

Fig. 5 graphically illustrates the exemplary embodiment shown in Figs. 4A-4D. As shown, curve 501 represents the accelerator pedal position at full release versus the available regenerative braking torque, where the accelerator pedal position is determined by actuator 405. Data point 503 represents the point at which the maximum regenerative braking torque is available, and thus corresponds to Fig. 4A. Data point 505 represents the point at which there is no regenerative braking torque available, and thus corresponds to Fig. 4B. In this exemplary embodiment, data point 505 corresponds to a pedal depression of 30%, where a pedal depression of 30% also corresponds to the neutral pedal position. Data points 507 and 509 correspond to Figs. 4C and 4D, respectively.

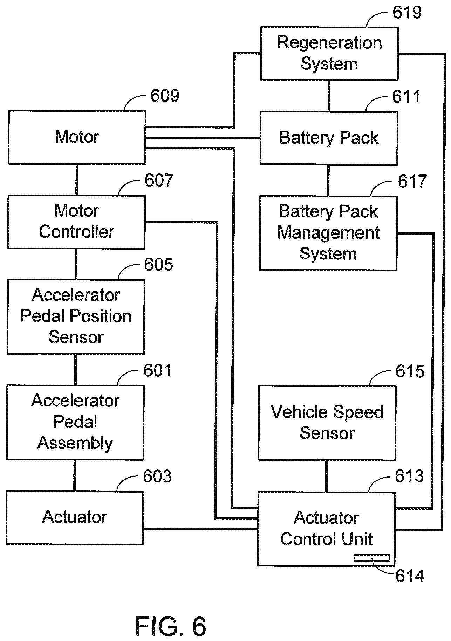

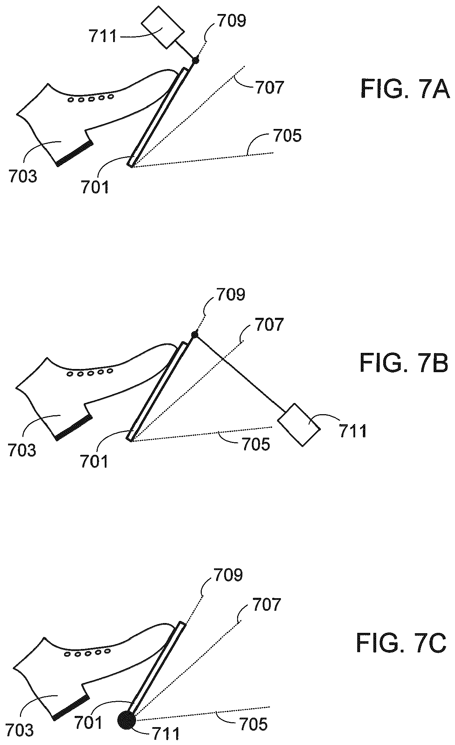

Fig. 6 provides a block diagram of the primary components, assemblies and subsystems used in at least one embodiment of the invention. As shown, attached to the accelerator pedal assembly 601 is the pedal actuator 603, actuator 603 corresponding to actuator 405 in Figs. 4A-4D. It should be understood that the invention is not limited to a particular accelerator pedal assembly nor is it limited to a particular actuator. Figs. 7-9 illustrate several exemplary pedal assemblies, each of which is shown coupled to an actuator 711, thereby allowing the pedal release position to be controlled. With respect to actuator 711, it may operate in a continuously variable manner or in a series of discrete, fixed steps. Preferably actuator 711 utilizes a DC motor, for example a DC motor coupled to a screw mechanism.

In the preferred embodiment as well as the configuration of a conventional EV, as the driver depresses accelerator pedal 601, the degree to which the pedal is depressed is monitored by a sensor 605, thereby allowing a motor control subsystem 607 to control the speed of motor 609 and thus the speed of the vehicle. The power required to operate motor 609 is provided by the battery or batteries within battery pack 611. As understood by those of skill in the art, there are numerous methods by which pedal position sensor 605 may be integrated into the accelerator pedal assembly. Typically sensor 605 is directly coupled to the pedal linkage, although other techniques may be used.

In accordance with the invention, control of actuator 603, and thus control of the release position of accelerator pedal 601, is provided by a control unit 613. Unit 613 may be a separate electronic control unit (ECU) or integrated into the vehicle's control system. Control unit 613 determines the desired release position for pedal 601 based on the available regenerative braking torque as noted above. To determine the available regenerative braking torque, control unit 613 requires the motor characteristics of motor 609, which are typically contained within a look-up table held in memory 614. Alternately, or in addition to using a look-up table of motor characteristics, control unit 613 may monitor motor 609 directly or via motor controller 607. Control unit 613 also takes into account vehicle speed which, in the illustrated configuration, is obtained from vehicle speed sensor 615. Additionally control unit 613 must take into account battery pack conditions. In the illustrated embodiment, battery pack management system 617 monitors the health and operation of battery pack 611 using a set of appropriate sensors. In addition to providing this information to the vehicle control system in order to allow battery pack performance to be optimized, battery pack management system 617 provides all necessary and relevant battery pack information to control unit 613. Some of the characteristics that may be monitored by management system 617 include state-of-charge (SOC), temperature (i.e., battery pack internal temperature and/or individual battery temperature), current battery pack capacity, rate of charge, rate of discharge, number of charge cycles to date, battery pack pressure, battery pack humidity level, short circuits, open circuits, etc. It will be appreciated that only the information relevant to determining available regenerative braking torque is necessarily communicated to control unit 613. Control unit 613 also receives data input from the vehicle's regeneration system 619.

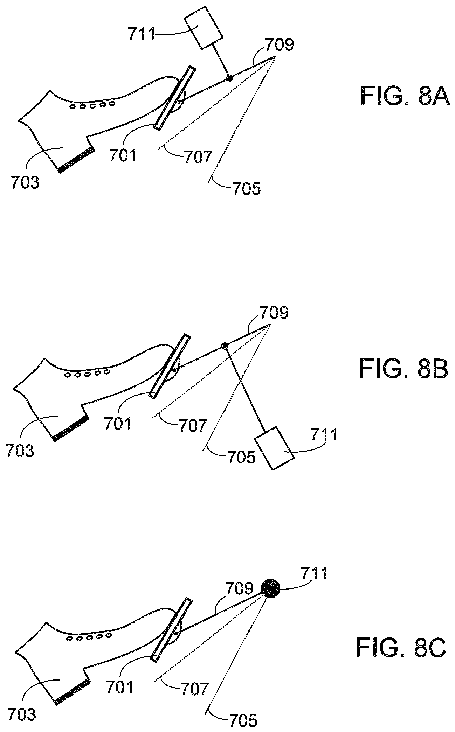

As previously noted, the pedal actuator may be coupled to any type of accelerator pedal. Figs. 7A-C and Figs. 8A-C illustrate several exemplary configurations. Each of the figures includes the accelerator pedal 701 and the driver's foot 703 for reference. Additionally, each of these figures provides reference planes that illustrate the pedal location when fully depressed (705), at the neutral pedal position (707), and when fully released (709). It will be appreciated that as described herein, the fully released position is dependent upon actuator 711 which, in turn, is dependent upon the available regenerative braking torque at any given period of time. Figs. 7A-7C illustrate a floor mounted accelerator pedal configuration with the actuator 711 coupled to the top of the pedal assembly (Fig. 7A); coupled to the bottom of the pedal assembly (Fig. 7B); and coupled to pivot point of the pedal assembly (Fig. 7C). Figs. 8A-8C illustrate a suspended accelerator pedal configuration with the actuator 711 coupled to the top of the pedal assembly (Fig. 8A); coupled to the bottom of the pedal assembly (Fig. 8B); and coupled to pivot point of the pedal assembly (Fig. 8C). It should be understood that the present invention is equally applicable to other accelerator pedal assemblies and other actuator configurations.

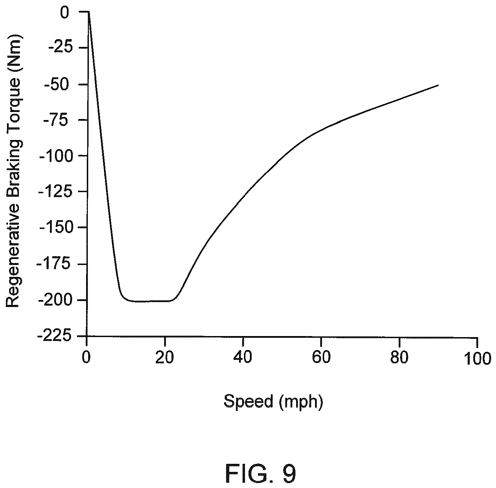

In a modification of the configuration described above, the release position of the accelerator pedal follows a pre-defined pedal torque map that not only takes into account battery pack characteristics, power train characteristics, and vehicle characteristics, but also the fact that when the vehicle is stopped (i.e., 0 mph), it would not be desirable to command a high regeneration torque. Accordingly, and as illustrated in the exemplary pedal torque map shown in Fig. 9, at a preset low vehicle speed (10 mph in this example), the pedal torque map dictates that the regeneration braking torque starts decreasing rather than holding steady as the available regenerative braking torque curve would allow. The rate of decreasing braking torque results in a demand for zero regenerative braking when the vehicle stops. As will be appreciated, by using a pre-defined pedal torque map such as that shown in Fig. 9 to control the pedal actuator, and thus the release position of the accelerator pedal, the driver is provided with direct, constant, and reliable feedback regarding the available regenerative braking torque.

Systems and methods have been described in general terms as an aid to understanding details of the invention. In some instances, well-known structures, materials, and/or operations have not been specifically shown or described in detail to avoid obscuring aspects of the invention. In other instances, specific details have been given in order to provide a thorough understanding of the invention. One skilled in the relevant art will recognize that the invention may be embodied in other specific forms, for example to adapt to a particular system or apparatus or situation or material or component, without departing from the scope of the invention as defined in the appended claims.

## Claims

1. A vehicle accelerator pedal assembly (601), comprising:
an accelerator pedal (201; 401; 701) adjustable between a first pedal position and (203) a second pedal position (205), wherein said first pedal position (203) corresponds to a fully depressed accelerator pedal, and wherein said second pedal position (205) corresponds to a fully released accelerator pedal;
an actuator (405; 603; 711) mechanically coupled to said accelerator pedal (201; 401; 701), said actuator (405; 603; 711) configured to receive a plurality of control signals; and
an actuator control unit (613) configured to transmit each of said plurality of control signals to said actuator (405; 603; 711),
**characterized in that**
said actuator (405; 603; 711) is configured to set said second pedal position (205) of said accelerator pedal (201; 401; 701) within a range of positions between a first accelerator pedal release position and a second accelerator pedal release position in response to each of said plurality of control signals;
said actuator control unit (613) is configured to select a specific accelerator pedal release position within said range of positions between said first accelerator pedal release position and said second accelerator pedal release position; and
said actuator control unit (613) is configured to determine an available regenerative braking torque and to select said specific accelerator pedal release position based on said available regenerative braking torque.

2. The vehicle accelerator pedal assembly (601) of claim 1, wherein a neutral pedal position (407) of said accelerator pedal is located between said first pedal position (203) and said second pedal position (205), wherein a vehicle power train applies 0% torque when said accelerator pedal (201; 401; 701) is positioned in said neutral pedal position (407), wherein said vehicle power train applies braking torque when said accelerator pedal (201; 401; 701) is positioned between said second pedal position (205) and said neutral pedal position (407), and wherein said vehicle power train applies driving torque when said accelerator pedal (201; 401; 701) is positioned between said neutral pedal position (407) and said first pedal position (203).

3. The vehicle accelerator pedal assembly (601) of claim 1, said available regenerative braking torque determined relative to at least one of (i) a current vehicle speed, (ii) a pre-defined pedal torque map, (iii) a set of power train characteristics, and/or (iv) a set of battery pack characteristics.

4. The vehicle accelerator pedal assembly (601) of claim 1, further comprising a vehicle speed sensor (615) coupled to said actuator control unit (613), wherein said vehicle speed sensor (615) monitors a current vehicle speed, and wherein said actuator control unit (613) determines said available regenerative braking torque relative to said current vehicle speed.

5. The vehicle accelerator pedal assembly (601) of claim 4, further comprising a set of vehicle power train characteristics contained in a look-up table held in a memory (614) accessible by said actuator control unit (613), wherein said actuator control unit (613) determines said available regenerative braking torque relative to said current vehicle speed and based on said set of vehicle power train characteristics.

6. The vehicle accelerator pedal assembly of claim 1 or claim 2, said actuator comprising a DC motor.

## Patentansprüche

1. Fahrzeuggaspedalanordnung (601), aufweisend:
ein Gaspedal (201; 401; 701), das zwischen einer ersten Pedalstellung (203) und einer zweiten Pedalposition (205) einstellbar ist, wobei die erste Pedalstellung (203) einem völlig niedergedrückten Gaspedal entspricht und wobei die zweite Pedalstellung (205) einem völlig losgelassenen Gaspedal entspricht;
ein Stellglied (405; 603; 711), das mit dem Gaspedal (201; 401; 701) mechanisch gekoppelt ist, wobei das Stellglied (405; 603; 711) ausgestaltet ist, um mehrere Steuersignale zu empfangen; und
eine Stellgliedsteuereinheit (613), die ausgestaltet ist, um jedes der mehreren Steuersignale an das Stellglied (405; 603; 711) zu übermitteln,
**dadurch gekennzeichnet, dass**
das Stellglied (405; 603; 711) ausgestaltet ist, um als Reaktion auf jedes der mehreren Steuersignale die zweite Pedalstellung (205) des Gaspedals (201; 401; 701) in einem Bereich von Stellungen zwischen einer ersten Gaspedalloslassstellung und einer zweiten Gaspedalloslassstellung einzustellen;
die Stellgliedsteuereinheit (613) konfiguriert ist, um eine spezifische Gaspedalloslassstellung im Bereich der Stellungen zwischen der ersten Gaspedalloslassstellung und der zweiten Gaspedalloslassstellung auszuwählen; und
die Stellgliedsteuereinheit (613) konfiguriert ist, um ein verfügbares Rückgewinnungsbremsmoment zu ermitteln und die spezifische Gaspedalloslassstellung basierend auf dem verfügbaren Rückgewinnungsbremsmoment auszuwählen.

2. Fahrzeuggaspedalanordnung (601) nach Anspruch 1, bei welcher eine neutrale Pedalstellung (407) des Gaspedals zwischen der ersten Pedalstellung (203) und der zweiten Pedalstellung (205) positioniert ist, wobei ein Fahrzeugantriebsstrang ein Drehmoment von 0% aufbringt, wenn das Gaspedal (201; 401; 701) in der neutralen Pedalstellung (407) positioniert ist, wobei der Fahrzeugantriebsstrang ein Bremsmoment aufbringt, wenn das Gaspedal (201; 401; 701) zwischen der zweiten Pedalstellung (205) und der neutralen Pedalstellung (407) positioniert ist, und wobei der Fahrzeugantriebsstrang ein Antriebsmoment aufbringt, wenn das Gaspedal (201; 401; 701) zwischen der neutralen Pedalstellung (407) und der ersten Pedalstellung (203) positioniert ist.

3. Fahrzeuggaspedalanordnung (601) nach Anspruch 1, wobei das verfügbare Rückgewinnungsbremsmoment in Abhängigkeit von wenigstens einem von (i) einer aktuellen Fahrzeuggeschwindigkeit, (ii) einem vordefinierten Pedaldrehmomentplan, (iii) einem Satz von Antriebsstrangdaten und/oder (iv) einen Satz von Batteriesatzdaten ermittelt wird.

4. Fahrzeuggaspedalanordnung (601) nach Anspruch 1, ferner aufweisend einen Fahrzeuggeschwindigkeitssensor (615), der mit der Stellgliedsteuereinheit (613) gekoppelt ist, wobei der Fahrzeuggeschwindigkeitssensor (615) eine aktuelle Fahrzeuggeschwindigkeit überwacht und wobei die Stellgliedsteuereinheit (613) das verfügbare Rückgewinnungsbremsmoment in Abhängigkeit von der aktuellen Fahrzeuggeschwindigkeit ermittelt.

5. Fahrzeuggaspedalanordnung (601) nach Anspruch 4, ferner aufweisend einen Satz von Fahrzeugantriebsstrangdaten, die in einer Nachschlagetabelle enthalten sind, die in einem Speicher (614) gehalten ist, der von der Stellgliedsteuereinheit (613) zugreifbar ist, wobei die Stellgliedsteuereinheit (613) das verfügbare Rückgewinnungsbremsmoment in Abhängigkeit von der aktuellen Fahrzeuggeschwindigkeit und basierend auf dem Satz von Fahrzeugantriebsstrangdaten ermittelt.

6. Fahrzeuggaspedalanordnung nach Anspruch 1 oder Anspruch 2, wobei das Stellglied einen Gleichstrommotor aufweist.

## Revendications

1. Ensemble de pédale d'accélérateur de véhicule (601), comprenant :
une pédale d'accélérateur (201 ; 401 ; 701) qui est réglable entre une première position de pédale (203) et une deuxième position de pédale (205), dans lequel ladite première position de pédale (203) correspond à une pédale d'accélérateur entièrement enfoncée, et dans lequel ladite deuxième position de pédale (205) correspond à une pédale d'accélérateur entièrement relâchée ;
un actionneur (405; 603; 711) qui est couplé mécaniquement à ladite pédale d'accélérateur (201 ; 401 ; 701), ledit actionneur (405 ; 603 ; 711) étant configuré pour recevoir une pluralité de signaux de commande ; et
une unité de commande d'actionneur (613) qui est configurée pour transmettre chacun de ladite pluralité de signaux de commande audit actionneur (405 : 603 ; 711),
**caractérisé en ce que :**
ledit actionneur (405 ; 603 ; 711) est configuré pour régler ladite deuxième position de pédale (205) de ladite pédale d'accélérateur (201 ; 401 ; 701) à l'intérieur d'une plage de positions entre une première position de relâchement de pédale d'accélérateur et une deuxième position de relâchement de pédale d'accélérateur en réponse à chacun de ladite pluralité de signaux de commande ;
ladite unité de commande d'actionneur (613) est configurée pour sélectionner une position de relâchement de pédale d'accélérateur spécifique à l'intérieur de ladite plage de positions entre la première position de relâchement de pédale d'accélérateur et ladite deuxième position de relâchement de pédale d'accélérateur ; et
ladite unité de commande d'actionneur (613) est configurée pour déterminer un couple de freinage régénératif disponible et pour sélectionner ladite position de relâchement de pédale d'accélérateur spécifique sur la base dudit couple de freinage régénératif disponible.

2. Ensemble de pédale d'accélérateur de véhicule (601) selon la revendication 1, dans lequel une position de pédale neutre (407) de ladite pédale d'accélérateur est située entre ladite première position de pédale (203) et ladite deuxième position de pédale (205), dans lequel un groupe motopropulseur de véhicule applique un couple de 0% lorsque ladite pédale d'accélérateur (201 ; 401 ; 701) se trouve à ladite position de pédale neutre (407), dans lequel ledit groupe motopropulseur de véhicule applique un couple de freinage lorsque ladite pédale d'accélérateur (201 ; 401 ; 701) se trouve entre ladite deuxième position de pédale (205) et ladite position de pédale neutre (407), et dans lequel ledit groupe motopropulseur de véhicule applique un couple d'entraînement lorsque ladite pédale d'accélérateur (201 ; 401 ; 701) se trouve entre ladite position de pédale neutre (407) et ladite première position de pédale (203).

3. Ensemble de pédale d'accélérateur de véhicule (601) selon la revendication 1, dans lequel ledit couple de freinage régénératif disponible est déterminé par rapport à au moins l'un parmi (i) une vitesse actuelle du véhicule, (ii) une cartographie de couple de pédale prédéfinie, (iii) un ensemble de caractéristiques du groupe motopropulseur, et / ou (iv) un ensemble de caractéristiques du bloc-batterie.

4. Ensemble de pédale d'accélérateur de véhicule (601) selon la revendication 1, comprenant en outre un capteur de vitesse de véhicule (615) qui est couplé à ladite unité de commande d'actionneur (613), dans lequel ledit capteur de vitesse de véhicule (615) surveille une vitesse actuelle du véhicule, et dans lequel ladite unité de commande d'actionneur (613) détermine ledit couple de freinage régénératif disponible par rapport à ladite vitesse actuelle du véhicule.

5. Ensemble de pédale d'accélérateur de véhicule (601) selon la revendication 4, comprenant en outre un ensemble de caractéristiques du groupe motopropulseur de véhicule qui sont contenues dans une table de correspondance maintenue dans une mémoire (614) qui est accessible par ladite unité de commande d'actionneur (613), dans lequel ladite unité de commande d'actionneur (613) détermine ledit couple de freinage régénératif disponible par rapport à ladite vitesse actuelle du véhicule et sur la base dudit ensemble de caractéristiques du groupe motopropulseur de véhicule.

6. Ensemble de pédale d'accélérateur de véhicule selon la revendication 1 ou 2, dans lequel ledit actionneur comprend un moteur à courant continu.
